# EUROPÄISCHE PATENTSCHRIFT

(11) **EP 1 892 395 B1**
(45) Veröffentlichungstag und Bekanntmachung des Hinweises auf die Patenterteilung: **03.06.2009**
(21) Anmeldenummer: 07013160.2
(22) Anmeldetag: 05.07.2007
(51) Int. Cl.: F01N 3/023, F01N 3/031, F01N 3/035, F01N 3/08, F01N 3/20

(54) **Abgasnachbehandlungssystem**
Exhaust gas treatment system
Système de traitement de gaz d'échappement

(30) Priorität: 16.08.2006 DE 102006038291
(43) Veröffentlichungstag der Anmeldung: 27.02.2008
(73) Patentinhaber: MAN Nutzfahrzeuge AG, 80995 München (DE)
(72) Erfinder: Döring, Andreas, 80339 München (DE); Richter, Klaus, 4400 Steyr (AT)

(56) Entgegenhaltungen:
- EP-A- 1 357 267
- WO-A-20/06029201
- DE-A1- 10 348 492
- US-A1- 2006 059 896

## Beschreibung

Gegenstand der Erfindung ist ein Abgasnachbehandlungssystem bei mit Luftüberschuss betriebenen Brennkraftmaschinen, wie Dieselmotoren und Benzinmotoren mit Direkteinspritzung, gemäß dem Oberbegriff des Anspruches 1.

Neben Feststoffpartikeln gehören Stickoxide zu den limitierten Abgaskomponenten, die während Verbrennungsvorgängen entstehen und deren erlaubte Emissionen immer weiter abgesenkt werden. Zur Minimierung dieser Abgaskomponenten bei in Kraftfahrzeugen betriebenen Brennkraftmaschinen werden heute unterschiedliche Verfahren eingesetzt. Die Verringerung der Stickoxide geschieht meist mit Hilfe von Katalysatoren, in sauerstoffreichem Abgas ist zusätzlich ein Reduktionsmittel erforderlich, um die Selektivität und die NO_{X} -Umsätze anzuheben. Bekannt geworden sind diese Verfahren unter dem Sammelbegriff SCR-Verfahren, wobei SCR für "selektive katalytische Reduktion" steht. Ihr Einsatz erfolgt seit vielen Jahren im Kraftwerksbereich und in jüngster Zeit auch bei Brennkraftmaschinen. Eine ausführliche Darstellung solcher Verfahren ist der DE 34 28 232 A1 zu entnehmen. Als SCR-Katalysatoren können V₂O₅-haltige Mischoxide, beispielsweise in der Form V₂O₅/WO₃/TiO₂, verwendet werden. Typische V₂O₅-Anteile liegen dabei zwischen 0,2-3%. Als Reduktionsmittel kommen in der praktischen Anwendung Ammoniak oder Ammoniak abspaltende Verbindungen, wie Harnstoff oder Ammoniumformiat, in fester oder Lösungsform zum Einsatz. Für die Umsetzung von einem Mol Stickstoffmonoxid ist dabei ein Mol Ammoniak notwendig.

4NO+4NH₃+O₂ ⇒ 4N₂ +6H₂O (1)

Wird den SCR-Katalysatoren ein platinhaltiger NO-Oxidationskatalysator zur Bildung von NO₂ vorgeschaltet

2NO+O₂ ⇔ 2NO₂ (2)

so kann die SCR-Reaktion erheblich beschleunigt und die Tieftemperaturaktivität merklich angehoben werden.

NO+2NH₃+NO₂ ⇒ 2N₂+3H₂O (3)

Bei in Fahrzeugen betriebenen Brennkraftmaschinen gestaltet sich die Stickoxidreduzierung mit Hilfe des SCR-Verfahrens deshalb schwierig, weil dort wechselnde Betriebsbedingungen vorliegen, was die mengenmäßige Zumessung des Reduktionsmittels erschwert. Es soll zwar einerseits ein möglichst hoher Umsatz an Stickoxiden erreicht werden, andererseits ist aber darauf zu achteten, dass es nicht zur Emission von unverbrauchtem Ammoniak kommt. Um hier Abhilfe zu schaffen, wird häufig ein dem SCR-Katalysator nachgeordneter Ammoniak-Sperrkatalysator eingesetzt, der überschüssigen Ammoniak zu Stickstoff und Wasserdampf umsetzt. Weiter kann der Einsatz von V₂O₅ als Aktivmaterial für den SCR-Katalysator dann Probleme aufwerfen, wenn die Abgastemperatur am SCR-Katalysator über 650°C liegt, weil V₂O₅ dann sublimiert. Aus diesem Grund werden für Hochtemperaturanwendungen V₂O₅-freie Eisen- oder Kupferzeolithe eingesetzt.

Zur Minimierung der Feinstoffpartikel werden sowohl im Kraftwerksbereich als auch bei Fahrzeugen entweder sogenannte Partikelabscheider oder Partikelfilter eingesetzt. Eine für die Anwendung in Fahrzeugen typische Anordnung mit Partikelabscheider ist beispielsweise in der EP 1 072 765 A1 beschrieben. Derartige Anordnungen unterscheiden sich von solchen mit Partikelfiltern dadurch, dass der Durchmesser der Kanäle des Partikelabscheiders wesentlich größer als der Durchmesser der größten vorkommenden Partikel ist während bei Partikelfiltern der Durchmesser der Filterkanäle im Bereich der Durchmesser der Partikel liegt. Infolge dieses Unterschiedes sind Partikelfilter verstopfungsgefährdet, was den Abgasgegendruck erhöht und die Motorleistung mindert. Eine Anordnung und ein Verfahren mit Partikelfilter ist der EP 0 341 832 A2 zu entnehmen. Die beiden vorgenannten Anordnungen bzw. Verfahren zeichnen sich dadurch aus, dass der jeweils stromauf zum Partikelabscheider bzw. Partikelfilter angeordnete Oxidationskatalysator - zumeist ein Katalysator mit Platin als Aktivmaterial - das Stickstoffmonoxid im Abgas mit Hilfe des ebenfalls enthaltenen Restsauerstoffes zu Stickstoffdioxid oxidiert, das sich wiederum im Partikelabscheider, bzw. Partikelfilter mit den Kohlenstoffpartikeln zu CO, CO₂, N₂ und NO umsetzt. Auf diese Weise erfolgt eine kontinuierliche Entfernung der angelagerten Feinstoffpartikel, Regenerationszyklen, wie sie aufwändig bei anderen Anordnungen durchgeführt werden müssen, entfallen dadurch.

2 NO₂ + C ⇒ 2 NO + CO₂ (4)

2 NO₂ + C ⇒ 2 NO + CO (5)

2 C + 2 NO₂ ⇒ N₂ + 2CO₂ (6)

Um die zukünftig geltenden Abgasbestimmungen zu erfüllen, ist der gleichzeitige Einsatz sowohl von Anordnungen zur Reduzierung der Stickoxidemission, als auch von Anordnungen zur Reduzierung der Feinstoffpartikelemission erforderlich. Hierzu sind bereits verschiedene Anordnungen und Verfahren bekannt geworden.

In der DE 103 48 799 A1 ist eine Anordnung beschrieben, die aus einem Oxidationskatalysator einem stromab zu diesem im Abgasstrom angeordneten SCR-Katalysator und einem wiederum zu diesem stromab im Abgasstrom angeordneten Partikelfilter besteht. Die Zuführung des Reduktionsmittels für die im SCR-Katalysator ablaufende selektive katalytische Reaktion erfolgt unmittelbar vor dem SCR-Katalysator über eine in Abhängigkeit von Betriebsparametern der Brennkraftmaschine gesteuerte Harnstoffeinspritzeinrichtung. Nachteilig bei dieser Anordnung ist, dass das im Oxidationskatalysator erzeugte Stickstoffdioxid durch die selektive katalytische Reduktion im SCR-Katalysator im wesentlichen vollständig verbraucht ist, also für die Umsetzung der im nachgeordneten Partikelfilter angelagerten Feinstoffpartikel nicht zur Verfügung steht. Die Regeneration des Partikelfilters muss deshalb aufwändig durch zyklisches Aufheizen des Abgasstroms bewerkstelligt werden, indem der Abgasstrom mit unverbrannten Kohlenwasserstoffen angereichert wird. Dies geschieht entweder durch Anfetten des Verbrennungsgemisches oder Eindüsen von Kraftstoff vor den Partikelfilter. Eine derartige Anordnung zum Regenerieren des Partikelfilters ist einerseits aufwändig und damit teuer, andererseits erzeugt die zyklische Regeneration des am Ende der Anordnung liegenden Partikelfilters erneut Schadstoffe die nicht mehr aus dem Abgas entfernt werden können. Zudem kann es beim Einsatz von Partikelfiltern zu einer Verstopfung der Filter durch Ölasche kommen, so dass diese in bestimmten Intervallen ausgebaut und gereinigt werden müssen.

Eine weitere Kombination aus einem Partikelfilter und einer Anordnung zur selektiven katalytischen Reduktion ist aus der EP 1 054 722 A1 bekannt geworden. Die dort beschriebene Anordnung besteht aus einem im Abgasstrom angeordneten Oxidationskatalysator der den Anteil des Stickstoffdioxides im Abgas erhöht, einem stromab nachgeordneten Feinstofffilter, einem Reservoir für die Reduktionsflüssigkeit, sowie einer Einspritzeinrichtung für die Reduktionsflüssigkeit, die hinter dem Feinstofffilter angeordnet ist und einem hierzu im Abgasstrom stromab angeordneten SCR-Katalysator. Die vorstehend beschriebene Anordnung erlaubt zwar eine kontinuierliche Umsetzung der im Feinstofffilter angelagerten Feinstoffpartikel vom Ruß-Typ mit Hilfe des im Oxidationskatalysator erzeugten Stickstoffdioxids, hat aber einen anderen gravierenden Nachteil. Der Partikelfilter bedingt eine Abkühlung des Abgases, so dass z. B. bei Verwendung der heute marktüblichen, mit AdBlue bezeichneten Reduktionsflüssigkeit die Abgastemperatur insbesondere nach dem Start der Brennkraftmaschine, bzw. beim Betreiben der Brennkraftmaschine im unteren Leistungsbereich zu niedrig ist um ohne den Anfall problematischer Nebenprodukte aus der 33%igen wässrigen Harnstofflösung Ammoniak zu erzeugen.

Im Zusammenhang mit der Zersetzung von Harnstoff ((NH₂)₂CO) in Ammoniak (NH₃) ist bekannt, dass dies unter optimalen Bedingungen (Temperaturen über 350° C) in zwei Stufen geschieht, nach

(NH₂)₂CO ⇒ NH₃ + HNCO (7)

erfolgt zunächst die Thermolyse, d. h. die thermische Zersetzung von Harnstoff. Anschließend erfolgt nach

HNCO+H₂O ⇒ NH₃+CO₂ (8)

Die Hydrolyse, also die katalytische Zersetzung von Isocyansäure (HNCO) in Ammoniak (NH₃) und Kohlendioxid (CO₂).

Da das Reduktionsmittel bei der Verwendung von AdBlue in einer in Wasser gelösten Form vorliegt, muss dieses Wasser vor und während der eigentlichen Thermo- und Hydrolyse verdampfen.

Sind die bei der vorstehenden Reaktion nach (7) und (8) vorliegenden Temperaturen unter 350°C bzw. wird nur langsam erhitzt, ist es aus der DE 40 38 054 A1 bekannt, dass hauptsächlich feste unschmelzbare Cyanursäure durch Trimerisierung der nach (7) gebildeten Isocyansäure gemäß 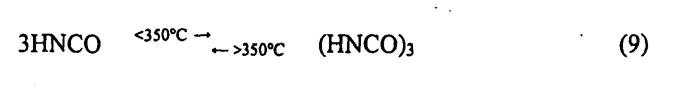 entsteht, die zur Verstopfung des nachfolgenden SCR-Katalysators führt. Abhilfe kann, wie in der erwähnten DE 40 38 054 ausgeführt, dadurch geschaffen werden, dass der mit dem Reduktionsmittel beladene Abgasstrom über einen Hydrolysekatalysator geführt wird. Die Abgastemperatur, ab der eine quantitative Hydrolyse möglich wird, lässt sich so auf 160°C drücken. Aufbau und Zusammensetzung eines entsprechenden Katalysators ist in der erwähnten Publikation ebenso beschrieben wie Aufbau und Funktion eines mit einem Hydrolysekatalysator ausgestatteten SCR-Katalysator-Systems.

Ausgehend vom vorstehend beschriebenen Stand der Technik ist es Aufgabe der Erfindung unter Vermeidung der Nachteile bekannter Anordnungen ein Abgasnachbehandlungssystem anzugeben, das sowohl die Partikelemission als auch die Stickoxidemission reduziert und das einerseits ohne spezielle Regenerationszyklen für den Partikelabscheider oder Partikelfilter auskommt und andererseits bei möglichst allen Betriebsbedingungen vom Reduktionsmittel ohne die Bildung problematischer Reaktionsprodukte NH₃ abspaltet.

Gelöst wir die Aufgabe durch ein Abgasnachbehandlungssystem zur Stickoxid- und Partikelreduzierung bei mit Luftüberschuss betriebenen Brennkraftmaschinen, gemäß dem Kennzeichen des Anspruches 1, vorteilhafte Weiterbildungen des Abgasnachbehandlungssystem sind in den abhängigen Ansprüchen gekennzeichnet.

Bei der Lösung der Aufgabe wurde davon ausgegangen, dass zur Erreichung der geforderten Abgasgrenzwerte die Stickoxidreduzierung durch einen SCR-Katalysator mit Hilfe von Ammoniak erfolgt und die Partikelreduktion mittels eines Partikelabscheiders oder eines Partikelfilters bewerkstelligt wird. Das erfindungsgemäße Abgasnachbehandlungssystem sieht im Abgasstrom der Brennkraftmaschine ein Oxidationskatalysator vor, der zumindest einen Teil des im Abgasstrom enthaltenen Stickstoffmonoxids in Stickstoffdioxid überführt. Stromab zum Oxidationskatalysator befindet sich im Abgasstrom ein erster Partikelabscheider oder Partikelfilter, der die im ersten Partikelabscheider oder Partikelfilter angelagerten Rußpartikel mit Hilfe des im Abgasstrom enthaltenen Stickstoffdioxids in Kohlenmonoxid, Kohlendioxid, Stickstoff und Stickstoffmonoxid umsetzt. Es wurde gefunden, dass sich die Wirkung des ersten Partikelabscheiders oder Partikelfilters vorteilhaft optimieren lässt, wenn stromauf zu diesem ersten Partikelabscheider oder Partikelfilter ein Abgasteilstrom vom Abgasstrom abzweigt und in diesen Abgasteilstrom aus einem Vorratsbehälter mittels einer Zumesseinrichtung ein im heißen Abgas Ammoniak abspaltender Stoff oder Ammoniak als Reduktionsmittel zuzugeben und der Abgasteilstrom sodann über einen stromab zur Zuführstelle des Reduktionsmittels nachgeordneten zweiten Partikelabscheider oder Partikelfilter geführt und stromab zu diesem und stromab zu den ersten Partikelabscheider oder Partikelfilter wieder mit dem Abgasstrom vereinigt wird.
Stromab zur Vereinigungsstelle ist ein SCR-Katalysator angeordnet, der die im Abgasstrom enthaltenen Stickoxide mit Hilfe des abgespaltenen Ammoniaks im Wege der selektiven katalytischen Reduktion zu Stickstoff und Wasserdampf reduziert. Durch die erfindungsgemäße Anordnung der Komponenten des Systems wird in vorteilhafter Weise erreicht, dass der erste Partikelabscheider oder Partikelfilter - ohne Einfluss auf die Wirksamkeit des Reduktionsmittels - z. B. durch Beladung mit einem Katalysatormaterial, das Stickstoffmonoxid in Stickstoffdioxid überführt, auf Partikelumsatz optimiert werden kann. Ebenso lässt sich die Anordnung im Abgasteilstrom optimal und damit vorteilhaft auf die Aufbereitung des Reduktionsmittels ausrichten, indem bestimmte die Aufbereitung des Reduktionsmittels fördernde Maßnahmen, wie die Steuerung oder Regelung des Massenstroms oder der Abgastemperatur im Abgasteilstrom realisiert werden.

Zur Minimierung der Baugröße und der Kosten des Abgasnachbehandlungssystem eröffnet sich in vorteilhafter Weise auch die Möglichkeit, den Oxidationskatalysator und den ersten Partikelabscheider oder Partikelfilter zu einem Bauteil zusammenzufassen, derart dass der erste Partikelabscheider oder Partikelfilter wenigstens teilweise mit einer den Oxidationskatalysator bildenden Aktivkomponente beschichtet oder imprägniert ist.

Zur Optimierung der Aufbereitung des Reduktionsmittels im Abgasteilstrom, kann stromab zur Zuführstelle für das Reduktionsmittel und stromauf zum zweiten Partikelabscheider oder Partikelfilter ein Hydrolysekatalysator angeordnet sein, der die Freisetzung von Ammoniak vorteilhaft verbessert. Dabei besteht in vorteilhafter Weise die Möglichkeit, den Hydrolysekatalysator und den Partikelabscheider oder Partikelfilter in einem Bauteil zu vereinen, derart, dass der Partikelabscheider oder Partikelfilter wenigstens teilweise mit einer den Hydrolysekatalysator bildenden Aktivkomponente beschichtet oder imprägniert ist.

Der Abgasteilstrom kann bereits stromauf zum Oxidationskatalysator vom Abgasstrom abzweigen, in den Abgasteilstrom ist dann ein weiterer Oxidationskatalysator anzuordnen, der zumindest einen Teil des im Abgasteilstrom enthaltenen Stickstoffmonoxids in Stickstoffdioxid überführt und der hinsichtlich aktivem Material und Größe auf die Verhältnisse im Abgasteilstrom abgestimmt ist. Dadurch lässt sich vorteilhaft erreichen, dass die Abkühlung des Abgasteilstroms geringer gehalten werden kann, als es im Abgasstrom selbst möglich wäre.

Bei mittels Abgasturbolader aufgeladenen Brennkraftmaschinen kann es von Vorteil sein, den Abzweig des Abgasteilstroms, in den die Reduktionsflüssigkeit eingespritzt wird, stromauf zur Turbine des Abgasturboladers anzuordnen um für die Abspaltung des Ammoniaks ein möglichst hohes Temperaturniveau zu schaffen. Handelt es sich um eine zweiflutig gespeiste Turbine, wobei die eine Flut von wenigstens einem ersten Zylinder und die andere Flut von wenigstens einem zweiten Zylinder mit Abgas beschickt wird, ist es vorteilhaft, den Abgasteilstrom von einer der beiden Fluten abzuzweigen. Die Zylinder der Flut, von der der Abgasteilstrom abzweigt, können dann mit anderen Motorparametern betrieben werden, als die Zylinder der anderen Flut, so dass in vorteilhafter Weise eine Optimierung der Verhältnisse im Abgasteilstrom hinsichtlich der Aufbereitung des Reduktionsmittels möglich wird, indem beispielsweise die Abgastemperatur in der Startphase oder in Niedriglastbereich angehoben wird.

Handelt es sich um eine Brennkraftmaschine mit zwei Abgasturboladern, wobei die Turbine des einen Abgasturboladers von einer ersten Zylinderbank der Brennkraftmaschine und die Turbine des anderen Abgasturboladers von einer zweiten Zylinderbank der Brennkraftmaschine mit Abgas beschickt wird, ist es vorteilhaft, wenn der Abgasteilstrom vor der Turbine eines der beiden Abgasturbolader vom Abgasstrom abzweigt. Die Zylinder der Zylinderbank von deren Abgastrakt der Abgasteilstroms abzweigt, können dann mit anderen Motorparametern betrieben werden, als die Zylinder der anderen Zylinderbank, so dass auch hier in vorteilhafter Weise eine Optimierung der Verhältnisse im Abgasteilstrom hinsichtlich der Aufbereitung des Reduktionsmittels möglich wird, indem beispielsweise die Abgastemperatur in der Startphase oder in Niedriglastbereich angehoben wird.

Zur exakten Dosierung des Reduktionsmittels kann es weiter vorteilhaft sein, im Abgasteilstrom ein Drosselelement anzuordnen, das die Raumgeschwindigkeit des Abgases und/ oder die Abgasmenge im Abzweig steuert oder regelt.

Um bei in Fahrzeuge eingebauten Brennkraftmaschinen im Schubbetrieb oder im Motorbremsbetrieb ein Zurückströmen des bereits mit Ammoniak beladenen Abgasteilstroms in Richtung Brennkraftmaschine zu vermeiden, ist es vorteilhaft, stromauf zur Zuführstelle, ein Rückschlagventil anzuordnen und so die stromauf liegenden Komponenten vor dem aggressiven Ammoniak zu schützen. Alternativ oder zusätzlich kann der Einsatz eines steuerbaren Absperrelementes, z. B. in Form einer Abgasklappe, im Abgasteilstrom, stromauf zur Zuführstelle, vorteilhaft sein, die bei der Gefahr des Rückströmens den Abgasteilstrom abriegelt. Eine derartige steuerbare Klappe könnte auch in vorteilhafter Weise als steuer- oder regelbares Drosselelement dienen.

Weiterhin kann es vorteilhaft sein, stromab zum SCR-Katalysator einen Katalysator zum Oxidieren von Ammoniak anzuordnen, um einen Ammoniakschlupf zu vermeiden.

Für den Katalysator zur Oxidation von NO zu NO₂ sowie für den Katalysator zur Oxidation von Ammoniak lassen sich Platin und/oder Palladium und/oder Iridium und/oder deren Oxide und/oder IrTiOx und/oder Zeolithe als Aktivmaterial vorteilhaft einsetzen. Die SCR-Katalysatoren zur Reduktion von Stickoxiden mit Hilfe von Ammoniak können als Aktivkomponente vorteilhaft Vanadium und/oder Vanadiumpentoxid und/oder Titandioxid und/oder Wolframoxid und/oder kupferhaltige Zeolithe und/oder eisenhaltige Zeolithe und/oder kobalthaltige Zeolithe enthalten. Als Aktivkomponenten für den Hydrolysekatalysator zur Freisetzung von Ammoniak kommen Titandioxid und/oder Siliziumdioxid und/oder Aluminiumoxid und/oder Zeolithe in Frage.

Zur Optimierung der Verhältnisse sowohl im Abgasstrom als auch im Abgasteilstrom kann es vorteilhaft sein, die Aktivkomponente des Oxidationskatalysators im Abgasstrom und die Aktivkomponente des weiteren Oxidationskatalysators im Abgasteilstrom unterschiedlich zu Wählen und jeweils auf die nachfolgenden chemischen Reaktionen abzustimmen.

Nachdem die Abgastemperatur am Partikelabscheider bzw. Partikelfilter ebenso wie der Gehalt an Stickstoffdioxid am Partikelabscheider bzw. Partikelfilter die Wirksamkeit des Abgasnachbehandlungssystems wesentlich mit beeinflusst, kann es von Vorteil sein, durch variieren der Motoreinstellung mittels der ohnehin vorhandenen Motorsteuereinrichtung, die Abgastemperatur bzw. den Gehalt an Stickstoffdioxid zu verändern. Insbesondere können, durch Veränderung der Motorparameter oder durch Zuführen von Kohlenwasserstoffen in den Abgasstrom vor dem Oxidationskatalysator zur Oxidation von Stickstoffmonoxid (und/ oder von Kohlenwasserstoff und/ oder von Kohlenmonoxid), die Abgastemperatur und der Stickstoffdioxidgehalt angehoben werden.

Weiter ist es vorteilhaft, mehrere der im Abgasnachbehandlungssystem enthaltenen Katalysatoren in einem Gehäuse zusammenzufassen, um die Kosten für das System und insbesondere den Platzbedarf für den Einbau in z. B. Nutzfahrzeuge zu minimieren. Partikelabscheider bzw. Partikelfilter sollten vorteilhaft so verbaut sein, dass sie auswechselbar sind.

Nachfolgend wird die Erfindung mit Hilfe der Zeichnungen anhand einiger Beispiele näher erläutert, es zeigen:
- Fig. 1: Ein erstes Abgasnachbehandlungssystem mit Teilstromhydrolyse
- Fig. 2: Ein zweites Abgasnachbehandlungssystem mit Teilstromhydrolyse
- Fig. 3: Ein Abgasnachbehandlungssystem für Brennkraftmaschinen mit Turbolader

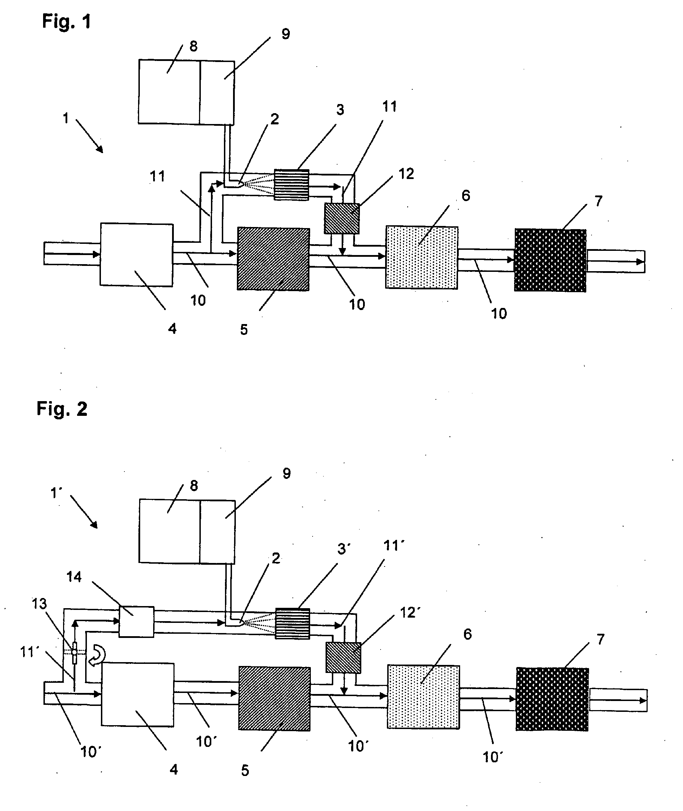

Eine Anordnung zur selektiven katalytischen Reduktion und zur Reduzierung von Feststoffpartikeln im Abgas einer Brennkraftmaschine ist, schematisch dargestellt, in Fig. 1 gezeigt. Die von einer Brennkraftmaschine (nicht dargestellt) durch die Verbrennungsvorgänge erzeugten Abgase, in den Figuren 1 bis 3 durch die Pfeile symbolisiert, werden zunächst über einen Oxidationskatalysator 4 geführt, dessen Aufgabe darin besteht, nach der vorstehend mit (2) bezeichneten Reaktion einen Teil des im Abgas enthaltenen Stickstoffmonoxides mittels des im Abgas vorhandenen überschüssigen Sauerstoffes zu Stickstoffdioxid aufzuoxidieren. Verwendet wird das so erzeugte Stickstoffdioxid einerseits bei der Reduktion der Feststoffpartikel und andererseits auch bei der nachgeordneten SCR-Reaktion, wie dies nachfolgend noch näher beschrieben ist.

Stromab zum Oxidationskatalysator 4 zweigt vom Abgasstrom 10 ein Abgasteilstrom 11 ab, in welchem dem heißen Abgas ein Reduktionsmittel möglichst motornah beigegeben wird. Bei dem Reduktionsmittel handelt es sich, wie bei Kraftfahrzeugen mit SCR-Katalysator in der Praxis gebräuchlich, um eine wässrige Harnstofflösung, selbstverständlich ist aber auch die Zugabe von Harnstoff in fester Form oder von Ammoniak denkbar, wie dies in der einschlägigen Fachliteratur bereits ausführlich beschrieben ist. Die Zumessung erfolgt in Abhängigkeit von Betriebsparametern der Brennkraftmaschine, gesteuert über eine Motorsteuereinheit (nicht dargestellt), in der Weise, dass über eine Düse 2 die wässrige Harnstofflösung unmittelbar vor einem Hydrolysekatalysator 3 in den Abgasstrom eingesprüht wird. Die Aufgabe des Hydrolysekatalysators 3 ist es, die wässrige Harnstofflösung unter Vermeidung von Nebenprodukten möglichst vollständig in Ammoniak und Wasserdampf überzuführen. Unter bestimmten Voraussetzungen erfolgt diese Aufspaltung auch ohne Hydrolysekatalysator hinreichend, so dass dieser dann entfallen kann.

Stromab zum Oxidationskatalysator 4 im Abgasstrom 10 ist ein erster Partikelabscheider 5 angeordnet und stromab zum Hydrolysekatalysator 3 im Abgasteilstrom 11 ein zweiter Partikelabscheider 12. In den Partikelabscheidern 5, 12 lagern sich die im Abgasstrom 10 bzw. im Abgasteilstrom 11 mitgeführten Rußpatikel an und werden durch das stromauf mit Hilfe des Oxidationskatalysators 4 erzeugte Stickstoffdioxid zu Kohlenmonoxid, Kohlendioxid, Stickstoff und Stickstoffmonoxid kontinuierlich umgesetzt, so dass aufwändige Regenerationszyklen für die Partikelabscheider 5, 12 entfallen.

Die eigentliche selektive katalytische Reduktion der Stickoxide erfolgt stromab zum ersten Partikelabscheider 5 und zum zweiten Partikelabscheider 12, nach der Rückführung des Abgasteilstroms 11 in den Abgasstrom 10, durch den stromab zur Rückführstelle gelegenen SCR-Katalysator 6. Dieser soll einen möglichst großen Anteil der im Abgas vorhandenen Stickoxide (NO_{X}) bei gleichzeitiger hoher Selektivität der Reduktion nach (1) oder (3) in Stickstoff und Wasserdampf überführen, ohne dass überschüssiger Ammoniak (NH₃) im Abgasstrom verbleibt. Bei der angesprochenen SCR-Reaktion ist das eventuell noch im Abgasstrom vorhandene restliche Stickstoffdioxid reaktionsfreudiger als das restliche im Abgas enthaltene NO, es ist demnach wünschenswert, entweder den Oxidationskatalysator 4 so auszulegen, dass ein möglichst hoher Anteil an Stickstoffmonoxid in Stickstoffdioxid übergeführt wird, also nach Möglichkeit mehr als zur Umsetzung der Rußpartikel in den Partikelabscheidern 5, 12 nötig ist oder den ersten Partikelfilter 4 mit einem Katalysatormaterial zu beschichten, das die Umsetzung von zusätzlichem im Abgasstrom 10 enthaltenen NO in NO₂ bewirkt.

Durch die stark exotherme Rußoxidation in den Partikelfiltern 5, 12 kann es zu einem deutlichen Temperaturanstieg kommen, so dass stromab des Partikelabscheiders auch Temperaturen oberhalb von 650°C, die zu einer Schädigung V₂O₅-haltiger SCR-Katatalysatoren führen würden, auftreten können. Aus diesem Grund kann der Einsatz von V₂O₅-freien SCR-Katalysatoren, die meist auf Eisen-, Kobalt- oder Kupferzeolithmaterial basieren, sinnvoll sein.

In Anbetracht der ständig wechselnden Betriebsbedingungen einer in einem Kraftfahrzeug betriebenen Brennkraftmaschine ist offensichtlich, dass die gewünschte möglichst hohe Umsetzungsrate an Stickoxiden nur dann sicher gelingen kann wenn ein geringfügiger Ammoniaküberschuss in Kauf genommen wird. Um in Fällen ungenügender Umsetzung zu verhindern, dass giftiger Ammoniak mit dem teilgereinigten Abgas an die Außenluft abgegeben wird, ist dem SCR-Katalysator ein NH₃-Oxidationskatalysator 7 nachgeordnet, mit dem das überschüssige NH₃ in Stickstoff und Wasserdampf übergeführt wird. Diese Oxidationsreaktion sollte möglichst selektiv ablaufen, so dass zumindest Anteile von Iridium oder Iridiumoxid als Aktivmaterial für den NH₃-Oxidationskatalysator 7 verwendet werden sollten. Wird dagegen ein hoher Umsatz bei geringer Selektivität angestrebt, kommen als Aktivmaterialien Platin und/oder Palladium und/oder deren Oxide in Frage.

Wie bereits weiter oben angedeutet, kann dann, wenn das Temperaturniveau an der Zuführstelle für das Reduktionsmittel über den gesamten Betriebsbereich hoch ist, auf den Hydrolysekatalysator 3 verzichtet werden. Weiter kann abweichend zum Beispiel nach Figur 1 an Stelle des Partikelabscheiders ein Partikelfilter eingesetzt werden, der Unterschied zwischen Partikelabscheider und Partikelfilter wurde bereits ausgeführt. Die Austauschbarkeit von Partikelabscheider und Partikelfilter gilt auch für die nachfolgend beschriebenen Beispiele ohne dass darauf nochmals explizit hingewiesen wird.

Durch die Anordnung zweier Partikelabscheider jeweils im Abgasstrom und im Abgasteilstrom und die Zusammenführung der Abgasströme stromab der beiden Partikelabscheider eröffnet sich die Möglichkeit, den Partikelabscheider im Abgasstrom, der von der größeren Abgasmenge durchströmt wird, mit einem Katalysatormaterial zu beschichten, das durch Oxidation NO in NO₂ überführt, ohne dass dadurch die Aufbereitung des Reduktionsmittels im Abgasteilstrom beeinflusst wird. Das durch die Beschichtung gewonnene zusätzliche NO₂ begünstigt die nachfolgende SCR-Reaktion erheblich, so dass sich der Gesamtumsatz an NO_{X} erheblich verbessert. Dieser Vorteil trifft auch auf alle nachfolgend beschriebenen Beispiele zu.

Ein weiteres Ausführungsbeispiel für das erfindungsgemäße Abgasnachbehandlungssystem ist in Fig. 2 gezeigt. Nachdem sich dieses Beispiel von dem Beispiel nach Figur 1 nur im Abgasteilstrom teilweise unterscheidet, werden nachfolgend nur die abweichenden Teile beschrieben, hinsichtlich der zum Beispiel nach Figur 1 gleichen Teile wird auf die einschlägigen Beschreibungsteile um Beispiel nach Figur 1 verwiesen.

Stromauf zu einem im Abgasstrom 10' befindlichen Oxidationskatalysator 4, der Stickstoffmonoxid zu Stickstoffdioxid oxidiert, zweigt vom Abgasstrom 10' ein Abgasteilstrom 11' ab, der über ein mittels einer Motorsteuereinrichtung (nicht dargestellt) in Abhängigkeit von Betriebsparametern der Brennkraftmaschine steuerbares Absperrorgan 13 geführt ist. Aufgabe des Absperrorgans 13 ist es, einerseits Massenstrom und Abgasmenge im Abgasteilstrom 11' in Abhängigkeit vom Betriebspunkt der Brennkraftmaschine zu steuern und andererseits bei bestimmten Betriebsbedingungen, z. B. im Motorbremsbetrieb einer in ein Nutzfahrzeug eingebauten Brennkraftmaschine, den Rückstrom von mit Ammoniak beladenen Abgasen in Richtung Motor zu unterbinden. Stromab zum Absperrorgan 13 ist ein weiterer Oxidationskatalysator 14 zur Überführung zumindest eines Teils des im Abgasteilstrom 11' mitgeführten Stickstoffmonoxids in Stickstoffdioxid angeordnet, diesem folgt in Strömungsrichtung des Abgases gesehen eine Zumesseinrichtung für das Reduktionsmittel, die mit der zur Figur 1 beschriebenen identisch ist. Um Wiederholungen zu vermeiden wird auf die entsprechenden Passagen der Beschreibung zu Figur 1 verwiesen.

Stromab zur Zuführstelle für das Reduktionsmittel ist wiederum ein Hydrolysekatalysator 3' angeordnet, der die Abspaltung von Ammoniak vom Reduktionsmittel auch bei ungünstigen Temperaturverhältnissen sicherstellt. Stromab zu diesem befindet sich im Abgasteilstrom 11' ebenfalls wieder ein Partikelabscheider 12', dem die Rückführstelle des Abgasteilstroms 11' in den Abgasstrom 10' nachgeordnet ist. Stromab zur Rückführstelle wird der Abgasstrom 10' dem SCR-Katalysator 6 und dem NH₃-Oxidationskatalysator 7 zugeführt, deren Funktion bereits in Verbindung mit Figur 1 ausführlich erläutert wurde. Es wird hierzu auf die Beschreibung zu Figur 1 verwiesen.

Neben dem bereits zu Figur 1 beschriebenen Vorteil besteht bei dem Beispiel nach Figur 2 durch den vorgesehenen weiteren Oxidationskatalysator 14 zusätzlich die Möglichkeit, durch die Wahl das Katalysatormaterials den Abgasnebenstrom 11' auf die Aufbereitung des Reduktionsmittels zu optimieren. Darüber hinaus kann bei entsprechenden Gegebenheiten der Oxidationskatalysator 4 im Abgasstrom 10' vollständig durch Beschichtung des Partikelabscheiders 5 mit entsprechend aktivem Katalysatormaterial gebildet werden, was Platzbedarf und Kosten optimiert.

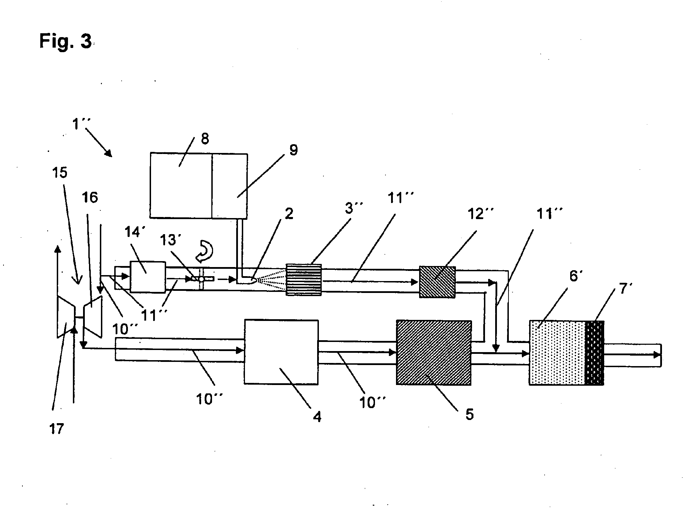

Bei heute in Nutzfahrzeugen betriebenen Brennkraftmaschinen ist üblicherweise eine wenigstens einstufige Turboladeranordnung vorhanden, die mit Hilfe der im Abgasstrom enthaltenen Abgasenthalpie, die der Brennkraftmaschine zugeführte Verbrennungsluft verdichtet. Für die Abgasnachbehandlung wirft dies deshalb Probleme auf, weil das über die Turbinen des oder der Abgasturbolader strömende Abgas durch diese zwangsläufig stark abgekühlt wird. Ein solchermaßen abgekühlter Abgasstrom ist insbesondere im Anfahrbetrieb und im unteren Teillastbereich nicht in der Lage für die Hydrolyse des Reduktionsmittel ausreichende Abgastemperaturen zu erreichen. Selbst wenn Hydrolysekatalysatoren eingesetzt werden, reicht das Temperaturniveau zumeist nicht aus. Abhilfe für dieses Problem schafft die Anordnung nach Fig. 3. Wie dort gezeigt, verzweigt der von der Brennkraftmaschine (nicht dargestellt) kommende Abgasstrom bereits vor der Turbine 16 des Abgasturboladers 15 in einen Abgasstrom 10", der über die Turbine 16 geführt ist und über diese den Verdichter 17 antreibt und einen Abgasteilstrom 11". Der Abgasteilstrom 11 " ist über einen Oxidationskatalysator 14' geführt, der einerseits in der normalen durch die Pfeile angedeuteten Strömungsrichtung des Abgases Stickstoffmonoxid in Stickstoffdioxid umsetzt und andererseits z. B. im Motorbremsbetrieb eventuell mit dem Abgasstrom in Richtung Brennkraftmaschine zurückströmenden Ammoniak bzw. zurückströmendes noch nicht umgesetztes Reduktionsmittel oxidiert. Stromab zum Oxidationskatalysator 14' schließt sich im Abgasteilstrom 11" ein Absperrorgan 13' an, das in Aufbau und Funktion dem in Verbindung mit Figur 2 beschriebenen Absperrorgan entspricht, es wird hierzu auf die einschlägigen Teile der Beschreibung zur Figur 2 verwiesen. Stromab zum Absperrorgan wird mit einer Zumesseinrichtung für das Reduktionsmittel, wie sie bereits zu Figur 1 beschrieben ist, das Reduktionsmittel in den Abgasnebenstrom 11 " zugeführt, das durch die im Abgasnebenstrom herrschende relativ hohe Abgastemperatur und den der Zuführstelle nachgeordneten Hydrolysekatalysator 3 ", ohne den Anfall problematischer Reaktionsprodukte wie Cyanursäure, Ammoniak abspaltet. Parallel zu dem Abgasnebenstrom 11 " wird der Abgasstrom 10" über einen Oxidationskatalysator 4 geführt, der zumindest einen Teil des im Abgas enthaltenen Stickstoffmonoxids zu Stickstoffdioxid oxidiert. Stromab zum Oxidationskatalysator 4 schließt sich im Abgasstrom 10' ein erster Partikelfilter 5 an. Im Abgasteilstrom 11 " folgt dem Hydrolysekatalysator 3 " ein zweiter Partikelfilter 12". Stromab zum ersten Partikelfilter 4 im Abgasstrom 10" und zum zweiter Partikelfilter 12" im Abgasteilstrom 11 " vereinen sich die parallel geführten Abgasströme wieder und durchströmen den stromab gelegenen SCR-Katalysator 6', der im Wege der selektiven katalytischen Reduktion die im Abgas vorhandenen Stickoxide in Stickstoff und Wasserdampf überführt. Zur Vermeidung von Ammoniakschlupf ist der SCR-Katalysator 6' in seinem stromab gelegenen Bereich mit einem einen NH₃-Oxidationskatalysator 7' ausbildenden Aktivmaterial beschichtet.

Handelt es sich bei der Turbine 16 in Abweichung zum Beispiel nach Figur 3 um eine zweiflutig gespeiste Turbine, wobei die eine Flut von wenigstens einem ersten Zylinder und die andere Flut von wenigstens einem zweiten Zylinder mit Abgas beschickt wird, ist es vorteilhaft, den Abgasteilstrom von einer der beiden Fluten abzuzweigen. Die Zylinder der Flut, von der der Abgasteilstrom abzweigt, können dann mit anderen Motorparametern (z.B. Kraftstoffeinspritzzeiten- oder mengen) betrieben werden, als die Zylinder der anderen Flut, so dass in vorteilhafter Weise eine Optimierung der Verhältnisse im Abgasteilstrom hinsichtlich der Aufbereitung des Reduktionsmittels möglich wird, indem Beispielsweise die Abgastemperatur in der Startphase oder in Niedriglastbereich, z. B. durch eine Nacheinspritzung im Expansions- oder Ausschubtakt, angehoben wird.

Bei Brennkraftmaschine mit zwei Abgasturboladern, bei der üblicherweise die Turbine des einen Abgasturboladers von einer ersten Zylinderbank der Brennkraftmaschine und die Turbine des anderen Abgasturboladers von einer zweiten Zylinderbank der Brennkraftmaschine mit Abgas beschickt wird, ist es vorteilhaft, den Abgasteilstrom vor der Turbine eines der beiden Abgasturbolader vom Abgasstrom abzuzweigt. Die Zylinder der Zylinderbank von deren Abgastrakt der Abgasteilstroms abzweigt, können dann mit anderen Motorparametern (z.B. Kraftstoffeinspritzzeiten- oder mengen) betrieben werden, als die Zylinder der anderen Zylinderbank, so dass auch hier in vorteilhafter Weise eine Optimierung der Verhältnisse im Abgasteilstrom hinsichtlich der Aufbereitung des Reduktionsmittels möglich wird, indem beispielsweise die Abgastemperatur in der Startphase oder in Niedriglastbereich, z. B. durch eine Nacheinspritzung im Expansions- oder Ausschubtakt, angehoben wird.

Hinsichtlich der in den vorstehenden Beispielen angesprochenen Katalysatoren ist anzumerken, das es sich um Vollkatalysatoren und/oder Beschichtungskatalysatoren handeln, die Aktivkomponenten der Katalysatoren können auf keramische und/oder metallische und/oder silikathaltige und/oder quarzhaltige Träger aufgebracht sein. Herstellbar sind derartige Katalysatoren mit Hilfe vieler bekannter Herstellverfahren, es wird hierzu ausdrücklich auf die einschlägige Fachliteratur verwiesen.

Zudem kann es sinnvoll sein, mehrere Katalysatoren und/oder Partikelabscheider in einem gemeinsamen Gehäuse unterzubringen, um Bauraum einzusparen und Kosten zu verringern.

Da es beim Einsatz von Partikelfiltern zu einer Verstopfung der Filter durch Ölasche kommen kann, ist es sinnvoll, die Filter so zu verbauen, dass diese auswechselbar und damit leicht zu reinigen sind.

Um das Abgasnachbehandlungssystem in seinem optimalen Betriebsbereich zu betreiben, kann die Abgastemperatur und/oder der Gehalt an Stickstoffdioxid an den Vorrichtungen zur Abscheidung von Partikeln durch Verstellen von Motorparametern und/oder durch Anheben der Kohlenwasserstoffkonzentration mit Hilfe einer Verstellung von Motorparametern, wie den Kraftstoffeinspritzzeiten- oder mengen, und/oder durch Zuführung von Kohlenwasserstoffen in den Abgasstrom stromauf der Katalysatoren zur Oxidation von Stickstoffmonoxid, die gleichzeitig die Oxidation von Kohlenwasserstoffen und/oder Kohlenmonoxid bewirken, verändert werden.

Die vorstehend beschriebenen Ausführungen lassen sich selbstverständlich mit dem Fachmann zugänglichem Fachwissen auf vielfältige Weise ausgestalten, ohne den grundlegenden erfinderischen Gedanken zu verlassen, den beschriebenen Ausführungsformen kommt somit nur Beispielcharakter zu.

## Patentansprüche

1. Abgasnachbehandlungssystem zur Stickoxid- und Partikelreduzierung bei mit Luftüberschuss betriebenen Brennkraftmaschinen, wobei die Stickoxidreduzierung mittels eines SCR-Katalysators (6, 6') und die Partikekeduktion mittels eines Partikelabscheiders (5) oder eines Partikelfilters erfolgt, wobei
- im Abgasstrom der Brennkraftmaschine ein Oxidationskatalysator (4) angeordnet ist, der zumindest einen Teil des im Abgasstrom (10, 10', 10") enthaltenen Stickstoffmonoxids in Stickstoffdioxid überführt,
- stromab zum Oxidationskatalysator (4) ein erster Partikelabscheider (5) oder Partikelfilter im Abgasstrom (10, 10', 10") angeordnet ist, der die im ersten Partikelabscheider (5) oder Partikelfilter angelagerten Rußpartikel mit Hilfe des im Abgasstrom enthaltenen Stickstoffdioxids in Kohlenmonoxid, Kohlendioxid, Stickstoff und Stickstoffmonoxid umsetzt,
- stromauf zum ersten Partikelabscheider (5, 5') oder Partikelfilter ein Abgasteilstrom (11, 11', 11'') vom Abgasstrom abzweigt,
- ein Vorratsbehälter (8) für ein Reduktionsmittel und eine Zumesseinrichtung (9) für das Reduktionsmittel vorgesehen sind, wobei die Zumesseinrichtung (9) das Reduktionsmittel in den Abgasteilstrom (11, 11', 11'') zugibt,
- das Reduktionsmittel ein stromab der Zuführstelle durch das heiße Abgas Ammoniak abspaltender Stoff ist oder das Reduktionsmittel Ammoniak ist,
- stromab zu der Zuführstelle ein zweiter Partikelabscheider (12, 12', 12") oder Partikelfilter im Abgasteilstrom (11, 11', 11 ") angeordnet ist,
- der Abgasteilstrom (11, 11', 11 ") stromab zum zweiten Partikelabscheider (12, 12', 12") oder Partikelfilter und stromab zum erster Partikelabscheider (5) oder Partikelfilter in den Abgasstrom (10, 10', 10") zurückgeführt ist,
- stromab zur Rückführstelle ein SCR-Katalysator (6, 6') angeordnet ist, der die im Abgasstrom enthaltenen Stickoxide mit Hilfe des abgespaltenen Ammoniaks im Wege der selektiven katalytischen Reduktion zu Stickstoff und Wasserdampf reduziert.

2. Abgasnachbehandlungssystem nach Anspruch 1, **dadurch gekennzeichnet, dass** der Oxidationskatalysator (4) und der erste Partikelabscheider (5) oder Partikelfilter ein Bauteil bilden, derart dass der erste Partikelabscheider (5) oder Partikelfilter wenigstens teilweise mit einer den Oxidationskatalysator (4) bildenden Aktivkomponente beschichtet oder imprägniert ist.

3. Abgasnachbehandlungssystem nach einem der vorhergehenden Ansprüche, **dadurch gekennzeichnet, dass** im Abgasteilstrom (11, 11', 11'') stromab zur Zuführstelle für das Reduktionsmittel und stromauf zum zweiten Partikelabscheider (12, 12', 12 ") oder Partikelfilter ein Hydrolysekatalysator (3, 3', 3'') zur Verbesserung der Freisetzung von Ammoniak angeordnet ist.

4. Abgasnachbehandlungssystem nach einem der vorhergehenden Ansprüche, **dadurch gekennzeichnet, dass** Hydrolysekatalysator (3, 3', 3'') und Partikelabscheider (12, 12', 12'') oder Partikelfilter in einem Bauteil vereint sind, derart, dass der Partikelabscheider (12, 12', 12") oder Partikelfilter wenigstens teilweise mit einer den Hydrolysekatalysator (3, 3', 3'') bildenden Aktivkomponente beschichtet oder imprägniert ist.

5. Abgasnachbehandlungssystem nach einem der vorhergehenden Ansprüche, **dadurch gekennzeichnet, dass** der Abgasteilstrom (11, 11', 11'') stromauf zum Oxidationskatalysator (4) vom Abgasstrom (10, 10', 10") abzweigt, und dass stromab zu diesem Abzweig ein weiterer Oxidationskatalysator (14, 14') im Abgasteilstrom (11, 11', 11'') angeordnet ist, der zumindest einen Teil des im Abgasteilstrom (11, 11', 11 ") enthaltenen Stickstoffmonoxids in Stickstoffdioxid überführt.

6. Abgasnachbehandlungssystem nach einem der vorhergehenden Ansprüche, **dadurch gekennzeichnet, dass** stromauf zum Oxidationskatalysator (4) im Abgasstrom (10'') wenigstens eine Turbine (16) wenigstens eines Abgasturboladers (15) angeordnet ist und dass der Abzweig des Abgasteilstroms in (11'') den das Reduktionsmittel zugeführt wird, stromauf zur Turbine (16) des Abgasturboladers (15) liegt.

7. Abgasnachbehandlungssystem nach Anspruch 6, **dadurch gekennzeichnet, dass** die Turbine (16) zweiflutig gespeist wird, wobei die eine Flut von wenigstens einem ersten Zylinder und die andere Flut von wenigstens einem zweiten Zylinder mit Abgas beschickt wird und der Abgasteilstroms (11, 11', 11'') von einer der beiden Fluten abgezweigt.

8. Abgasnachbehandlungssystem nach Anspruch 7, **dadurch gekennzeichnet, dass** die Zylinder der Flut von der der Abgasteilstroms (11, 11', 11'') abzweigt mit anderen Motorparametern betrieben werden als die Zylinder der anderen Flut.

9. Abgasnachbehandlungssystem nach Anspruch 6, **dadurch gekennzeichnet, dass** zwei Abgasturbolader vorhanden sind und dass die Turbine des einen Abgasturboladers von einer ersten Zylinderbank der Brennkraftmaschine und die Turbine des anderen Abgasturboladers von einer zweiten Zylinderbank der Brennkraftmaschine mit Abgas beschickt werden und der Abgasteilstrom (11, 11', 11'') vor der Turbine eines der beiden Abgasturbolader vom Abgasstrom abzweigt.

10. Abgasnachbehandlungssystem nach Anspruch 9, **dadurch gekennzeichnet, dass** die Zylinderbank von deren Abgastrakt der Abgasteilstroms (11, 11', 11'') abzweigt mit anderen Motorparametern betrieben wird als die andere Zylinderbank.

11. Abgasnachbehandlungssystem nach einem der vorhergehenden Ansprüche, **dadurch gekennzeichnet, dass** im Abgasteilstrom (11', 11 ") ein Drosselelement angeordnet ist, mit dem die Raumgeschwindigkeit des Abgases und/ oder die Abgasmenge im Abzweig steuer- oder regelbar ist.

12. Abgasnachbehandlungssystem nach einem der vorhergehenden Ansprüche, **dadurch gekennzeichnet, dass** im Abgasteilstrom (11', 11''), stromauf zur Zuführstelle für das Reduktionsmittel, ein Rückschlagventil angeordnet ist.

13. Abgasnachbehandlungssystem nach einem der vorhergehenden Ansprüche**, dadurch gekennzeichnet, dass** im Abgasteilstrom (11, 11', 11''), stromauf zur Zuführstelle für das Reduktionsmittel, ein steuer- oder regelbares Absperrelement (12) angeordnet ist.

14. Abgasnachbehandlungssystem nach einem der vorhergehenden Ansprüche, **dadurch gekennzeichnet, dass** stromab zum SCR-Katalysator (6, 6') ein NH₃-Oxidationskatalysator, (7, 7') angeordnet ist.

15. Abgasnachbehandlungssystem nach einem der vorhergehenden Ansprüche, **dadurch gekennzeichnet, dass** als Aktivkomponente für den Oxidationskatalysator (4, 14,14') zur Umwandlung von Stickstoffmonoxid in Stickstoffdioxid und/ oder für den NH₃-Oxidationskatalysator (7, 7') zur Oxidation von Ammoniak Platin und/oder Palladium und/oder Iridium und/oder deren Oxide und/oder IrTiO_{X} und/oder Zeolithe eingesetzt werden.

16. Abgasnachbehandlungssystem nach einem der vorhergehenden Ansprüche, **dadurch gekennzeichnet, dass** der SCR-Katalysator (6, 6') zur Reduktion von Stickoxiden mit Hilfe von Ammoniak als Aktivkomponente Vanadium und/oder Vanadiumpentoxid und/oder Titandioxid und/oder Wolframoxid und/oder kupferhaltige Zeolithe und/oder eisenhaltige Zeolithe und/oder kobalthaltige Zeolithe enthalten.

17. Abgasnachbehandlungssystem nach einem der vorhergehenden Ansprüche, **dadurch gekennzeichnet, dass** der Hydrolysekatalysator (3, 3', 3") zur Freisetzung von Ammoniak als Aktivkomponenten Titandioxid und/oder Siliziumdioxid und/oder Aluminiumoxid und/oder Zeolithe enthält.

18. Abgasnachbehandlungssystem nach einem der vorhergehenden Ansprüche, **dadurch gekennzeichnet, dass** die Aktivkomponente des Oxidationskatalysators (4) und die Aktivkomponente des weiteren Oxidationskatalysators (14, 14') unterschiedlich sind und jeweils auf die nachfolgenden chemischen Reaktionen optimiert sind.

19. Abgasnachbehandlungssystem nach einem der vorhergehenden Ansprüche, **dadurch gekennzeichnet, dass** die Abgastemperatur und/oder der Gehalt an Stickstoffdioxid am Partikelabscheider (5, 12, 12', 12") oder Partikelfilter durch Verstellen von Motorparametern und/oder durch Anheben der Kohlenwasserstoffkonzentration mit Hilfe einer Verstellung von Motorparametern und/oder durch Zuführung von Kohlenwasserstoffen in den Abgasstrom stromauf des Oxidationskatalysator (4, 14, 14') zur Oxidation von Stickstoffmonoxid verändert wird.

20. Abgasnachbehandlungssystem nach einem der vorhergehenden Ansprüche, **dadurch gekennzeichnet, dass** mehrere Katalysatoren und/oder Partikelabscheider in einem gemeinsamen Gehäuse untergebracht sind.

21. Abgasnachbehandlungssystem nach einem der vorhergehenden Ansprüche, **dadurch gekennzeichnet, dass** die Partikelfilter und/oder Partikelabscheider so verbaut sind, dass sie auswechelbar sind.

## Claims

1. An exhaust aftertreatment system for reducing nitrogen oxides and particles in internal combustion engines operated with an excess of air, the nitrogen oxide reduction taking place by means of an SCR catalyst (6, 6') and the particle reduction by means of a particle separator (5) or a particle filter, wherein
- an oxidation catalyst (4) which converts at least part of the nitrogen monoxide contained in the exhaust stream (10, 10', 10") into nitrogen dioxide is arranged in the exhaust stream of the internal combustion engine,
- downstream of the oxidation catalyst (4) there is arranged in the exhaust stream (10, 10', 10") a first particle separator (5) or particle filter, which converts the soot particles collected in the first particle separator (5) or particle filter with the aid of the nitrogen dioxide contained in the exhaust stream into carbon monoxide, carbon dioxide, nitrogen and nitrogen monoxide,
- a partial exhaust stream (11, 11', 11") branches off from the exhaust stream upstream of the first particle separator (5, 5') or particle filter,
- a storage container (8) for a reducing agent and an admetering means (9) for the reducing agent are provided, the admetering means (9) adding the reducing agent to the partial exhaust stream (11, 11', 11"),
- the reducing agent is a substance which splits off ammonia downstream of the supply point due to the hot exhaust, or the reducing agent is ammonia,
- a second particle separator (12, 12', 12") or particle filter is arranged in the partial exhaust stream (11, 11', 11") downstream of the supply point,
- the partial exhaust stream (11, 11', 11") is returned into the exhaust stream (10, 10', 10") downstream of the second particle separator (12, 12', 12") or particle filter and downstream of the first particle separator (5) or particle filter,
- an SCR catalyst (6, 6') is arranged downstream of the return point, which catalyst reduces the nitrogen oxides contained in the exhaust stream to nitrogen and water vapour with the aid of the split-off ammonia by way of selective catalytic reduction.

2. An exhaust aftertreatment system according to Claim 1, **characterised in that** the oxidation catalyst (4) and the first particle separator (5) or particle filter form a component, such that the first particle separator (5) or particle filter is coated or impregnated at least partially with an active constituent forming the oxidation catalyst (4).

3. An exhaust aftertreatment system according to one of the preceding claims, **characterised in that** a hydrolysis catalyst (3, 3', 3") for improving the release of ammonia is arranged in the partial exhaust stream (11, 11', 11") downstream of the supply point for the reducing agent and upstream of the second particle separator (12, 12', 12 ") or particle filter.

4. An exhaust aftertreatment system according to one of the preceding claims, **characterised in that** the hydrolysis catalyst (3, 3', 3") and particle separator (12, 12', 12") or particle filter are combined in one component, such that the particle separator (12, 12', 12") or particle filter is coated or impregnated at least partially with an active constituent forming the hydrolysis catalyst (3, 3', 3").

5. An exhaust aftertreatment system according to one of the preceding claims, **characterised in that** the partial exhaust stream (11, 11', 11") branches off from the exhaust stream (10, 10', 10") upstream of the oxidation catalyst (4), and that downstream of this branch-off a further oxidation catalyst (14, 14') is arranged in the partial exhaust stream (11, 11', 11"), which catalyst converts at least part of the nitrogen monoxide contained in the partial exhaust stream (11, 11', 11") into nitrogen dioxide.

6. An exhaust aftertreatment system according to one of the preceding claims, **characterised in that** at least one turbine (16) of at least one exhaust turbocharger (15) is arranged upstream of the oxidation catalyst (4) in the exhaust stream (10") and that the branch-off of the partial exhaust stream (11") into which the reducing agent is supplied lies upstream of the turbine (16) of the exhaust turbocharger (15).

7. An exhaust aftertreatment system according to Claim 6, **characterised in that** the turbine (16) is a two-scroll one, one scroll being charged with exhaust from at least one first cylinder and the other scroll from at least one second cylinder and the partial exhaust stream (11, 11', 11") branches off from one of the two scrolls.

8. An exhaust aftertreatment system according to Claim 7, **characterised in that** the cylinders of the scroll from which the partial exhaust stream (11, 11', 11") branches off are operated with different engine parameters from the cylinders of the other scroll.

9. An exhaust aftertreatment system according to Claim 6, **characterised in that** two exhaust turbochargers are present and that the turbine of one exhaust turbocharger is charged with exhaust from a first cylinder bank of the internal combustion engine and the turbine of the other exhaust turbocharger from a second cylinder bank of the internal combustion engine and the partial exhaust stream (11, 11', 11") branches off from the exhaust stream before the turbine of one of the two exhaust turbochargers.

10. An exhaust aftertreatment system according to Claim 9, **characterised in that** the cylinder bank from the exhaust system of which the partial exhaust stream (11, 11', 11") branches off is operated with different engine parameters from the other cylinder bank.

11. An exhaust aftertreatment system according to one of the preceding claims, **characterised in that** a throttle element is arranged in the partial exhaust stream (11', 11"), with which element the space velocity of the exhaust and/or the amount of exhaust in the branch-off can be under open-loop or closed-loop control.

12. An exhaust aftertreatment system according to one of the preceding claims, **characterised in that** a non-return valve is arranged in the partial exhaust stream (11', 11"), upstream of the supply point for the reducing agent.

13. An exhaust aftertreatment system according to one of the preceding claims, **characterised in that** a shut-off element (12) which can be under open-loop or closed-loop control is arranged in the partial exhaust stream (11, 11', 11"), upstream of the supply point for the reducing agent.

14. An exhaust aftertreatment system according to one of the preceding claims, **characterised in that** an NH₃ oxidation catalyst (7, 7') is arranged downstream of the SCR catalyst (6, 6').

15. An exhaust aftertreatment system according to one of the preceding claims, **characterised in that** platinum and/or palladium and/or iridium and/or their oxides and/or IrTiO_{X} and/or zeolites are used as active constituent for the oxidation catalyst (4, 14, 14') for converting nitrogen monoxide into nitrogen dioxide and/or for the NH₃ oxidation catalyst (7, 7') for the oxidation of ammonia.

16. An exhaust aftertreatment system according to one of the preceding claims, **characterised in that** the SCR catalyst (6, 6') for the reduction of nitrogen oxides with the aid of ammonia contains vanadium and/or vanadium pentoxide and/or titanium dioxide and/or tungsten oxide and/or copper-containing zeolites and/or iron-containing zeolites and/or cobalt-containing zeolites as active constituent.

17. An exhaust aftertreatment system according to one of the preceding claims, **characterised in that** the hydrolysis catalyst (3, 3', 3") for releasing ammonia contains titanium dioxide and/or silicon dioxide and/or aluminium oxide and/or zeolites as active constituents.

18. An exhaust aftertreatment system according to one of the preceding claims, **characterised in that** the active constituent of the oxidation catalyst (4) and the active constituent of the further oxidation catalyst (14, 14') are different and are each optimised for the subsequent chemical reactions.

19. An exhaust aftertreatment system according to one of the preceding claims, **characterised in that** the exhaust temperature and/or the content of nitrogen dioxide at the particle separator (5, 12, 12', 12") or particle filter is changed by adjusting engine parameters and/or by raising the hydrocarbon concentration with the aid of an adjustment of engine parameters and/or by supplying hydrocarbons into the exhaust stream upstream of the oxidation catalyst (4, 14, 14') for the oxidation of nitrogen monoxide.

20. An exhaust aftertreatment system according to one of the preceding claims, **characterised in that** a plurality of catalysts and/or particle separators are housed in a common housing.

21. An exhaust aftertreatment system according to one of the preceding claims, **characterised in that** the particle filters and/or particle separators are installed such that they are exchangeable.

## Revendications

1. Système de post-traitement des gaz d'échappement pour réduire les oxydes d'azote et les particules émises par des moteurs à combustion interne fonctionnant avec un excédent d'air,
la réduction des oxydes d'azote étant faite à l'aide d'un catalyseur SCR (6, 6') et la réduction des particules se faisant à l'aide d'un séparateur de particules (5) ou d'un filtre à particules,
système dans lequel
- un catalyseur d'oxydation (4) est installé dans la veine des gaz d'échappement du moteur à combustion interne pour transformer au moins une partie du monoxyde d'azote contenu dans la veine des gaz d'échappement (10, 10', 10") en dioxyde d'azote,
- un premier séparateur de particules (5) ou filtre à particules est installé dans la veine des gaz d'échappement (10, 10', 10") en aval du catalyseur d'oxydation (4) pour convertir les particules de noir de fumée accumulées dans le premier séparateur de particules (5) ou filtre à particules à l'aide du dioxyde d'azote contenu dans la veine des gaz d'échappement pour obtenir du monoxyde de carbone, du dioxyde de carbone, de l'azote et du monoxyde d'azote,
- une veine partielle de gaz d'échappement (11, 11', 11") est prélevée de la veine des gaz d'échappement en amont du premier séparateur de particules (5, 5') ou filtre à particules,
- un réservoir (8) d'agent réducteur et une installation de dosage (9) de l'agent réducteur sont prévus, l'installation de dosage (9) fournissant l'agent réducteur à la veine partielle des gaz d'échappement (11, 11', 11"),
- l'agent réducteur est obtenu en aval du point d'alimentation comme ammoniac obtenu par séparation par les gaz d'échappement chauds ou encore l'agent réducteur est de l'ammoniac,
- en aval du point d'alimentation, un second séparateur de particules (12, 12', 12") ou filtre à particules est prévu dans la veine partielle des gaz d'échappement (11, 11', 11"),
- la veine partielle des gaz d'échappement (11, 11', 11") est renvoyée dans la veine des gaz d'échappement (10, 10', 10") en aval du second séparateur de particules (12, 12', 12") ou filtre à particules et en aval du premier séparateur de particules (5) ou filtre à particules,
- un catalyseur SCR (6, 6') est prévu en aval du point de réintroduction, ce catalyseur réduit les oxydes d'azote contenus dans la veine des gaz d'échappement à l'aide de l'ammoniac dégagé par une réduction catalytique sélective donnant de l'azote et de la vapeur d'eau.

2. Système de post-traitement des gaz d'échappement selon la revendication 1,
**caractérisé en ce que**
le catalyseur d'oxydation (4) et le premier séparateur à particules (5) ou filtre à particules, constituent un ensemble de façon que le premier séparateur de particules (5) ou filtre à particules soit revêtu ou imprégné au moins en partie avec un composant actif constituant le catalyseur d'oxydation (4).

3. Système de post-traitement des gaz d'échappement selon l'une des revendications précédentes,
**caractérisé en ce qu'**
un catalyseur d'hydrolyse (3, 3', 3") pour améliorer le dégagement d'ammoniac est prévu dans la veine partielle des gaz d'échappement (11, 11', 11") en aval du point d'introduction de l'agent réducteur et en amont du second filtre séparateur de particules (12, 12', 12") ou filtre à particules.

4. Système de post-traitement des gaz d'échappement selon l'une des revendications précédentes,
**caractérisé en ce que**
le catalyseur d'hydrolyse (3, 3', 3") et le séparateur de particules (12, 12', 12") ou filtre à particules sont réunis en un seul composant, le séparateur de particules (12, 12', 12") ou le filtre à particules étant revêtus ou imprégnés au moins en partie avec un composant actif formant le catalyseur d'hydrolyse (3, 3', 3").

5. Système de post-traitement des gaz d'échappement selon l'une des revendications précédentes,
**caractérisé en ce que**
la veine partielle des gaz d'échappement (11, 11', 11") est dérivée de la veine des gaz d'échappement (10, 10', 10") en amont du catalyseur d'oxydation (4), et
en aval de cette dérivation, il est prévu un autre catalyseur d'oxydation (14, 14') dans la veine partielle des gaz d'échappement (11, 11', 11") qui convertit au moins une partie du monoxyde d'azote contenu dans la veine partielle des gaz d'échappement (11, 11', 11") en dioxyde d'azote.

6. Système de post-traitement des gaz d'échappement selon l'une des revendications précédentes,
**caractérisé en ce qu'**
au moins une turbine (16) d'au moins un turbocompresseur de gaz d'échappement (15), est prévu en amont du catalyseur d'oxydation (4) dans la veine des gaz d'échappement (10"), et
la dérivation de la veine partielle des gaz d'échappement (11") reçoit de l'agent réducteur, en amont de la turbine (16) du turbocompresseur de gaz d'échappement (15).

7. Système de post-traitement des gaz d'échappement selon la revendication 6,
**caractérisé en ce que**
la turbine (16) est alimentée en gaz d'échappement par un double flux, l'un des flux venant d'au moins un premier cylindre et l'autre flux venant d'au moins un second cylindre et la veine partielle des gaz d'échappement (11, 11', 11") est dérivée de l'un des deux flux.

8. Système de post-traitement des gaz d'échappement selon la revendication 7,
**caractérisé en ce que**
le cylindre dont le flux fournit la veine partielle des gaz d'échappement (11, 11', 11") fonctionne avec d'autres paramètres de moteur que les cylindres de l'autre flux.

9. Système de post-traitement des gaz d'échappement selon la revendication 6,
**caractérisé par**
deux turbocompresseurs de gaz d'échappement, et
la turbine de l'un des turbocompresseurs de gaz d'échappement est alimentée par un premier banc de cylindres du moteur à combustion interne et la turbine de l'autre turbocompresseur de gaz d'échappement est alimentée par un second banc de cylindres du moteur à combustion interne fournissant les gaz d'échappement, et
la veine partielle des gaz d'échappement (11, 11', 11") est prélevée dans la veine des gaz d'échappement en amont de la turbine de l'un des deux turbocompresseurs de gaz d'échappement.

10. Système de post-traitement des gaz d'échappement selon la revendication 9,
**caractérisé en ce que**
le banc de cylindres dont la conduite des gaz d'échappement fournit la veine partielle des gaz d'échappement (11, 11', 11") fonctionne avec d'autres paramètres de moteur que l'autre banc de cylindres

11. Système de post-traitement des gaz d'échappement selon l'une des revendications précédentes,
**caractérisé par**
un élément d'étranglement installé dans la veine partielle des gaz d'échappement (11', 11") qui permet de commander ou de réguler la vitesse dans l'espace des gaz d'échappement et/ou la quantité des gaz d'échappement dans la dérivation.

12. Système de post-traitement des gaz d'échappement selon l'une des revendications précédentes,
**caractérisé par**
un clapet antiretour installé dans la veine partielle des gaz d'échappement (11', 11") en amont du point d'alimentation de l'agent réducteur.

13. Système de post-traitement des gaz d'échappement selon l'une des revendications précédentes,
**caractérisé en ce qu'**
en amont du point d'alimentation de l'agent réducteur, la veine partielle des gaz d'échappement (11, 11', 11") comporte un élément d'arrêt (12) commandé ou réglable.

14. Système de post-traitement des gaz d'échappement selon l'une des revendications précédentes,
**caractérisé en ce qu'**
un catalyseur d'oxydation NH₃ (7, 7'), est prévu en amont du catalyseur SCR (6, 6').

15. Système de post-traitement des gaz d'échappement selon l'une des revendications précédentes,
**caractérisé en ce que**
le composant actif utilisé pour le catalyseur d'oxydation (4, 14, 14') pour convertir le monoxyde d'azote en dioxyde d'azote et/ou pour le catalyseur d'oxydation NH₃ (7, 7') pour oxyder de l'ammoniac, est du platine et/ou du palladium et/ou de l'iridium et/ou des oxydes de ces métaux et/ ou de l'IrTiOₓ et/ ou des zéolithes.

16. Système de post-traitement des gaz d'échappement selon l'une des revendications précédentes,
**caractérisé en ce que**
pour réduire les oxydes d'azote avec de l'ammoniac en composants actifs, le catalyseur SCR (6, 6') comporte du vanadium et/ou du pentoxyde de vanadium et/ou du dioxyde de titane et/ou de l'oxyde de tungstène et/ou des zéolithes contenant du cuivre et/ou des zéolithes contenant du fer et/ou des zéolithes contenant du cobalt.

17. Système de post-traitement des gaz d'échappement selon l'une des revendications précédentes,
**caractérisé en ce que**
pour libérer l'ammoniac le catalyseur d'hydrolyse (3, 3', 3") comporte comme composants actifs, du dioxyde de titane et/ou du dioxyde de silicium et/ou de l'oxyde d'aluminium et/ou des zéolithes.

18. Système de post-traitement des gaz d'échappement selon l'une des revendications précédentes,
**caractérisé en ce que**
les composants actifs du catalyseur d'oxydation (4) et les composants actifs de l'autre catalyseur d'oxydation (14, 14') sont différents et sont respectivement optimisés selon les réactions chimiques en aval.

19. Système de post-traitement des gaz d'échappement selon l'une des revendications précédentes,
**caractérisé en ce que**
la température des gaz d'échappement et/ou la teneur en dioxyde d'azote dans le séparateur de particules (5, 12, 12', 12") ou filtre à particules, se modifie par le réglage des paramètres du moteur et/ou par relèvement de la concentration en hydrocarbures, par le réglage des paramètres du moteur et/ ou pour la fourniture d'hydrocarbures à la veine des gaz d'échappement en amont du catalyseur d'oxydation (4, 14, 14') pour oxyder le monoxyde d'azote.

20. Système de post-traitement des gaz d'échappement selon l'une des revendications précédentes,
**caractérisé en ce que**
plusieurs catalyseurs et/ou séparateurs de particules sont logés dans un boîtier commun.

21. Système de post-traitement des gaz d'échappement selon l'une des revendications précédentes,
**caractérisé en ce que**
les filtres à particules et/ou les séparateurs de particules sont construits de façon à être remplaçables.
